# EUROPEAN PATENT APPLICATION

(11) **EP 4 618 552 A1**
(43) Date of publication of application: **17.09.2025**
(21) Application number: 23888094.2
(22) Date of filing: 09.11.2023
(51) Int. Cl.: H04N 21/2187, H04N 21/472, H04N 21/431

(54) **METHOD AND APPARATUS FOR LIVESTREAMING INTERACTION, AND DEVICE AND STORAGE MEDIUM**

(30) Priority: 10.11.2022 CN 202211408452
(71) Applicant: Beijing Zitiao Network Technology Co., Ltd., Beijing 100190 (CN)
(72) Inventor: LI, Yijie, Beijing 100028 (CN); LI, Jiayi, Beijing 100028 (CN)
(74) Representative: Grünecker Patent- und Rechtsanwälte PartG mbB
(86) International application number: PCT/CN2023/130859
(87) International publication number: WO 2024/099409

(57) **Abstract**

According to an embodiment of the invention, a method for live streaming interactions and apparatus, device, and storage medium are provided. The method comprises: presenting, in response to an access request for a target live streaming room, a live streaming interface for providing live streaming content; and presenting a target area in the live streaming interface, the target area providing a set of multimedia contents associated with the live streaming content, wherein the multimedia contents correspond to respective time instants related to the live streaming content, and the target area comprises a sharing entry corresponding to each multimedia content. In this manner, embodiments in the present disclosure may provide related multimedia content in a live streaming room (for example, text or video content about a highlight of the live streaming), thereby helping to increase interest in the live streaming room.

## Description

This application claims the benefit of Chinese Patent Application No. 202211408452.4, entitled "METHOD FOR LIVE STREAMING INTERACTIONS, APPARATUS, DEVICE AND STORAGE MEDIUM" filed Nov. 10, 2022, the entire content of which is incorporated herein by reference.

### FIELD

Example embodiments in the present disclosure generally relate to the field of computers, and in particular, to a method for live streaming interactions, apparatus, device and storage medium.

### BACKGROUND

With the development of the Internet, Internet-based live streaming services have become one of the important channels for people to obtain information. On one hand, users watching live streaming expect to obtain richer content through live streaming. On the other hand, live streaming broadcasters also hope that users may actively participate in live streaming interactions and improve the attention of live streaming.

### SUMMARY

**In** a first aspect of the present disclosure, a method for live streaming interaction is provided. The method comprises presenting, in response to an access request for a target live streaming room, a live streaming interface for providing live streaming content; and presenting a multimedia content area in the live streaming interface, the multimedia content area providing a set of multimedia contents associated with the live streaming content, the multimedia content area comprising a sharing entry corresponding to each multimedia content.

**In** a second aspect of the present disclosure, an apparatus for live streaming interaction is provided. The apparatus includes: an interface presenting module, configured to present, in response to an access request for a target live streaming room, a live streaming interface for providing live streaming content; and an area presenting module, configured to present a multimedia content area in the live streaming interface, the multimedia content area providing a set of multimedia contents associated with the live streaming content, the multimedia content area comprising a sharing entry corresponding to each multimedia content.

**In** a third aspect of the present disclosure, an electronic device is provided. The apparatus includes at least one processing unit; and at least one memory coupled to the at least one processing unit and storing instructions for execution by the at least one processing unit. The instructions, when executed by the at least one processing unit, cause the device to perform the method of the first aspect.

**In** a fourth aspect of the present disclosure, a computer-readable storage medium is provided. The medium stores a computer program, and when the program is executed by a processor, the method of the first aspect is implemented.

It should be understood that the content described in the content part of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure may be implemented;
FIG. 2 illustrates an example live streaming interface according to some embodiments of the present disclosure;
FIGS. 3A-3C illustrate an example live streaming interface according to further embodiments of the present disclosure;
FIGS. 4A-4E are schematic diagrams of a process of sharing multimedia content according to some embodiments of the present disclosure;
FIGS. 5A-5B show schematic diagrams of a process of sharing a live streaming room according to some embodiments of the present disclosure;
FIG. 6 shows a flowchart of an example process of live streaming interactions according to some embodiments of the present disclosure;
FIG. 7 illustrates a block diagram of an apparatus for live streaming interactions according to some embodiments of the present disclosure; and
FIG. 8 illustrates a block diagram of a device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms and should not be construed as limited to the embodiments set forth herein, but rather, these embodiments are provided for a more thorough and complete understanding of the present disclosure. It should be understood that the drawings and embodiments of the present disclosure are for exemplary purposes only and are not intended to limit the scope of the present disclosure.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

Herein, unless explicitly stated, "responding to A" performs one step and does not imply that this step is performed immediately after "A" but may include one or more intermediate steps.

It may be understood that the data involved in the technical solution (including but not limited to the data itself, the obtaining or use of the data) should follow the requirements of the corresponding laws and regulations and related regulations.

It may be understood that, before the technical solutions disclosed in the embodiments of the present disclosure are used, the types of personal information related to the present disclosure, the usage scope, the usage scenario and the like should be notified to the user in an appropriate manner according to the relevant laws and regulations, and the authorization of the user is obtained.

For example, in response to receiving an active request from a user, prompt information is sent to the user to explicitly prompt the user that the requested operation will need to obtain and use personal information of the user, so that the user may autonomously select whether to provide personal information to software or hardware executing the operation of the technical solution of the present disclosure according to the prompt information.

As an optional but non-limiting implementation, in response to receiving an active request of the user, a manner of sending prompt information to the user may be, for example, a pop-up window, and prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process are merely illustrative, and do not constitute a limitation on implementations of the present disclosure, and other manners of meeting related laws and regulations may also be applied to implementations of the present disclosure.

As discussed above, in traditional live streaming, viewers typically only simply share the entry of the live streaming room. Such manner of sharing may be inefficient for shared users, and it is difficult for a shared user in a short time to be able to generate interest in the live streaming room.

Embodiments of the invention provide a solution for live streaming interactions. According to the solution, in response to an access request for a target live streaming room, a live streaming interface for providing live streaming content may be presented. Further, a multimedia content area may be presented in the live streaming interface, where the multimedia content area is used to provide a set of multimedia contents associated with the live streaming content, and the multimedia content area includes sharing entries corresponding to each multimedia content.

Based on this manner, embodiments in the present disclosure may enrich the content provided by the live streaming room, improve the interest of the user interactions with the live streaming. For example, it may promote users sharing of the live streaming room and/or multimedia content in the live streaming room.

### Example Environment

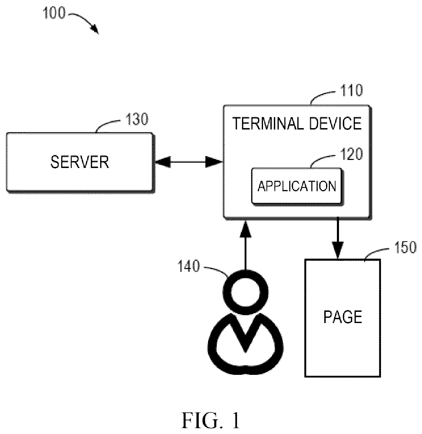

FIG. 1 illustrates a schematic diagram of an example environment 100 in which embodiments of the present disclosure may be implemented. In the example environment 100, an application 120 is installed in the terminal device 110. A user 140 may interact with the application 120 via the terminal device 110 and/or an attached device of the terminal device 110. The application 120 may be a video application, such as a video sharing application or a video live streaming application. The application 120 may provide the user 140 with at least one or more services related to the video content.

In environment 100 of FIG. 1, upon opening the application 120, the terminal device 110 may present a page 150 of the application 120. The page 150 may include various pages that may be provided by the application 120, such as a personal homepage, detail pages of the video content, content authoring pages, content posting pages, message pages, and so forth. The application 120 may provide a content creation functionality, including capturing, uploading, editing, and/or publishing media content including video content.

**In** some embodiments, the terminal device 110 communicates with a server 130 to enable the provisioning of services to the application 120. The terminal device 110 may be of any type including mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a "wearable" circuit, etc.). The server 130 may be various types of computing systems/servers capable of providing computing power, including, but not limited to, mainframes, edge computing nodes, computing devices in a cloud environment, and the like.

It should be understood that the structures and functions of the various elements in the environment 100 are described for exemplary purposes only and do not imply any limitation to the scope of the present disclosure.

### Example Live streaming interface

As discussed above, the terminal device 110 may present a live streaming interface to the user 140. In some embodiments, after receiving the access request for the target live streaming room, the terminal device 110 may present a live streaming interface for providing the live streaming content. It should be understood that such access request may include any suitable access manner, including but not limited to opening a live streaming room entry in the application 120, directly accessing a live streaming room through a link address, and the like.

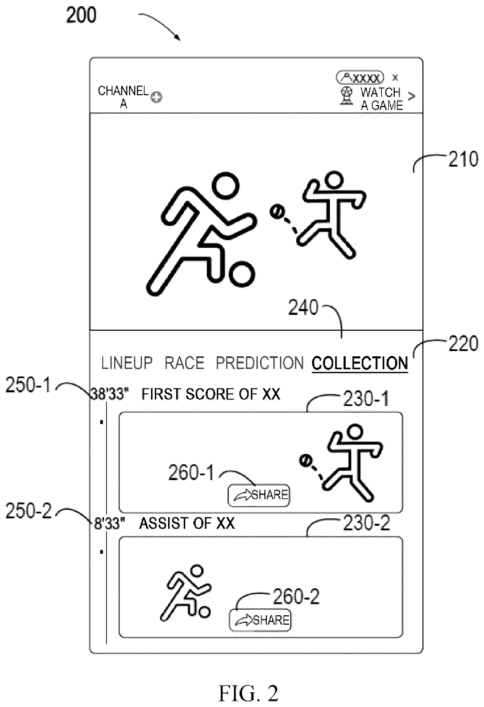

FIG. 2 illustrates an example live streaming interface 200 in accordance with some embodiments of the present disclosure. As shown in FIG. 2, the live streaming interface 200 may include a content area 210 for providing live streaming content. For example, such live streaming content may be, for example, video live streaming content for an event.

In some embodiments, the live streaming interface 200 may also include a multimedia content area 220 that may be used to provide a set of multimedia contents 230-1 and 230-2 (individually or collectively referred to as multimedia content 230) associated with the live streaming content.

In some embodiments, the multimedia content area 220 may be a tab 240, such as "highlight", in the live streaming interface 200. In the initial interface of the live streaming interface 200, the tab page 240 may be, for example, a tab page selected by default. Alternatively, the tab page 240 page is a tab page that is not selected and not presented, and the terminal device 110 may present the multimedia content area 220 after receiving the selection for the tab page 240.

As shown in FIG. 2, the multimedia content 230 may include picture content and/or video content. Further, the multimedia content 230 may also include textual descriptions associated therewith, such as titles.

In some embodiments, such multimedia content 230 may be automatically generated and/or published by the live streaming platform. Alternatively, such multimedia content 230 may also be published by a managing party (e.g., an operator) associated with the live streaming room.

In some embodiments, the live streaming platform may automatically generate one or more multimedia content based on the live streaming content in the live streaming room. Taking sport events as an example, the live streaming platform may detect a specific event in the live event and generate a picture and/or a video clip associated with the specific event.

With soccer games as an example of the live streaming content, such specific events may include: a scoring event, a not scored penalty event, a yellow card event, a red card event, a shooting event, a rescue event, etc. in the event.

It should be understood that different types of focus events may be preconfigured according to the different content of live streaming. Correspondingly, the live streaming platform may extract, from the live streaming content, a picture or a video clip corresponding to the configured focus event using appropriate technologies such as image recognition, as the multimedia content to be published automatically. The present disclosure is not intended to limit the techniques for event recognition.

In some embodiments, a managing party (e.g., an operator) of the live streaming room may also publish one or more multimedia content during the live streaming. In some embodiments, the managing party may, for example, modify the multimedia content generated by the live streaming platform automatically to generate final multimedia content to be published. Alternatively, or additionally, the managing party may also independently author the multimedia content associated with the live streaming content for publication.

In some embodiments, the published multimedia content may correspond to a particular time in the live streaming content. With multimedia content generated automatically based on a preconfigured event as an example, such multimedia content may correspond to the time of an occurrence of the preconfigured event in the live streaming content. For example, if the multimedia content is generated automatically based on a scoring event, it may be automatically associated to a scoring moment in the event.

As another example, the managing party of the live streaming room may configure the moment with which the multimedia content to be published is associated. For example, the managing party may author new multimedia content and associate it to a particular moment in the game.

Alternatively, the moment associated with the multimedia content may also correspond to a publishing time of the multimedia content. For example, if the managing party publishes the multimedia content at "the 20th minute in the event", the multimedia content may correspond to the moment in the live streaming content corresponding to " the 20th minute in the event".

In some embodiments, the multimedia content may also be with associated the publication information. Such publication information may correspond to a textual description of the multimedia content, e.g., a title. Alternatively, such publication information may also correspond to a cover of the multimedia content (e.g., a video clip).

In some embodiments, such publication information may be determined automatically by a live streaming platform, or configured by the managing party.

With continued reference to FIG. 2, as shown in FIG. 2, the terminal device 110 may display based on the received multimedia content and the release information. For example, the terminal device 110 may present the multimedia content 230 and the text description of the multimedia content 230 in the multimedia content area 220. In some embodiments, for the multimedia content of video, the terminal device 110 may configure the cover corresponding to the display by default.

In addition, the terminal device 110 may further present time information 250-1 and 250-2 in the multimedia content area 220, to indicate a time instance (moment) corresponding to the multimedia content 230-1 and the multimedia content 230-2. For example, the time information 250-1 may indicate that the multimedia content 230-1 corresponds to "38 minutes 33 seconds" in the live streaming event; the time information 250-2 may indicate that the multimedia content 230-2 corresponds to "8 minutes 33 seconds" in the live streaming event.

In some embodiments, the presentation order of the multiple pieces of multimedia content 230 in the multimedia content area 220 may be based on the order of the corresponding time instances. For example, the multimedia content 230 corresponding to the time of update may be presented preferentially in the multimedia content area 220.

In some embodiments, the terminal device 110 may further present, in the multimedia content area 220, the sharing entry 260-1 and 260-2 (individually or collectively referred to as the sharing entry 260) corresponding to the multimedia content 230-1 and 230-2. Such sharing entries 260 may support sharing of corresponding multimedia content 230. The process of sharing is described in detail below.

In some embodiments, the terminal device 110 may further receive and display multimedia content newly published in the multimedia content area 220.

In some embodiments, to facilitate the user's attention to the multimedia content newly published, the terminal device 110 may also present, at a predetermined location of the live streaming interface, a sharing component corresponding to the multimedia content, regardless of whether the multimedia content area is currently presented in the target interface.

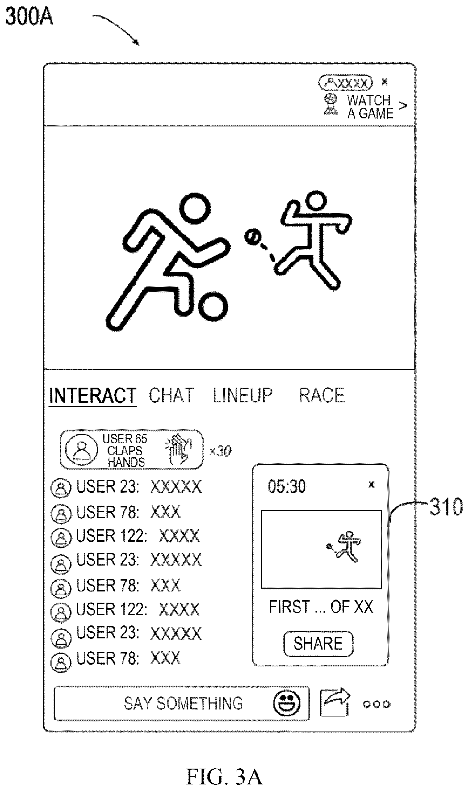

FIG. 3A illustrates an example live streaming interface 300A in accordance with some embodiments of the present disclosure. As shown in FIG. 3A, in the live streaming interface 300A, the multimedia content area is not currently presented, and the terminal device 110 may present, for example, a sharing component 310 corresponding to the multimedia content newly published at the lower right of the interface. For example, such sharing component 310 may be a floating window component that may be closed.

As shown in FIG. 3A, the sharing component 310 may present at least part of the multimedia content. For example, the sharing component 310 may present the picture content, the cover of the video content, or the entire video content.

In addition, the sharing component 310 may also present other related information of the multimedia content, for example, a text description of the multimedia content as described above, time information corresponding to the multimedia content, and the like.

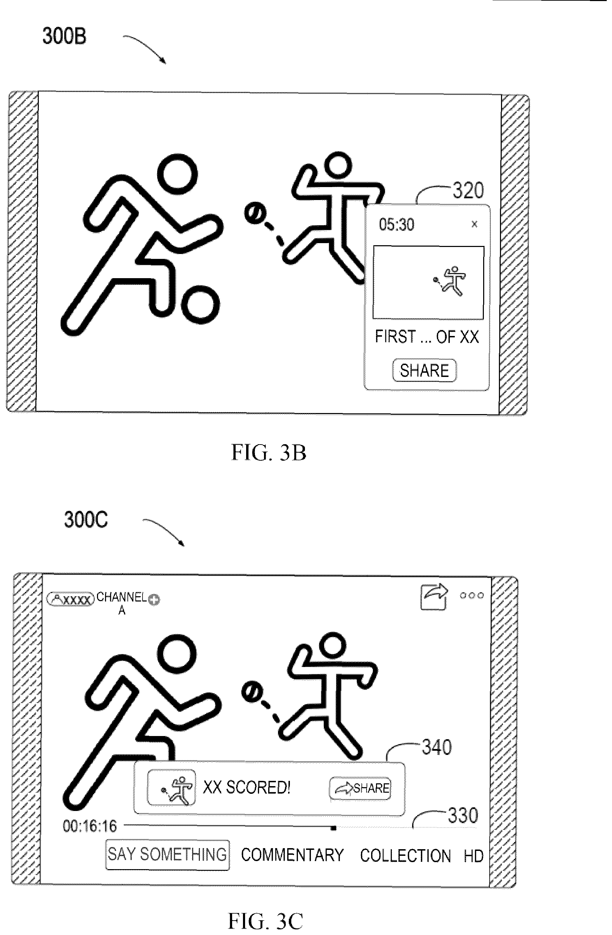

FIG. 3B illustrates an example live streaming interface 300B in accordance with some embodiments of the present disclosure. As shown in FIG. 3B, in the live streaming interface 300B, a content area for providing live streaming content may be displayed in full screen. Further, the terminal device 110 may present, for example, the sharing component 320 corresponding to the multimedia content newly published at the lower right of the interface. For example, such sharing component 320 may be a floating window component that may be closed. Similar to the sharing component 310, the sharing component 320 may also present at least part of the multimedia content and other related information.

In some embodiments, the sharing component 310 and/or the sharing component 320 discussed above may stop displaying in response to a user's closing request. Alternatively, such sharing component 310 and/or sharing component 320 may also stop displaying automatically after being presented for a predetermined duration. In this manner, the interference to the user of the live streaming room may be mitigated.

In some embodiments, the terminal device 110 may also provide playback for the live streaming content. FIG. 3C illustrates an example live streaming interface 300C in accordance with some embodiments of the present disclosure. As shown in FIG. 3C, in the playback mode, the terminal device 110 may present a time axis 330 corresponding to the live streaming content of the live streaming room.

Further, the terminal device 110 may determine a playback time instance indicated by the time axis 330. For example, the user may switch to playing the content at a specific historical time instance by dragging the time axis 330.

Correspondingly, if the terminal device 110 determines that there is associated multimedia content at the playback time, the terminal device 110 may present the sharing component 340 associated with the multimedia content.

Similar to the sharing component 310 and the sharing component 320, the sharing component 340 may also present at least part of the multimedia content and other related information.

In some embodiments, the sharing component 310, the sharing component 320, and the sharing component 340 may have the same or different sharing logic. For example, the sharing component 310, the sharing component 320, and the sharing component 340 may select the same sharing logic as the sharing entry 260.

Based on the manner discussed above, the user of the live streaming room may not only obtain the live streaming content but also obtain the multimedia content published in real time. Such multimedia content is, for example, a highlight of the live streaming content, or related peripheral content of the live streaming content. In this manner, embodiments in the present disclosure may greatly enrich content that may be obtained by the user in the live streaming room and improve the efficiency of content acquisition.

In addition, by providing the sharing entry for the multimedia content, embodiments in the present disclosure may greatly promote the user's interest in sharing the content related to the live streaming room or the live streaming room, thereby improving the interaction probability of the user and the live streaming room.

### Example Sharing Process

Examples of sharing multimedia content and/or live streaming rooms will be described below.

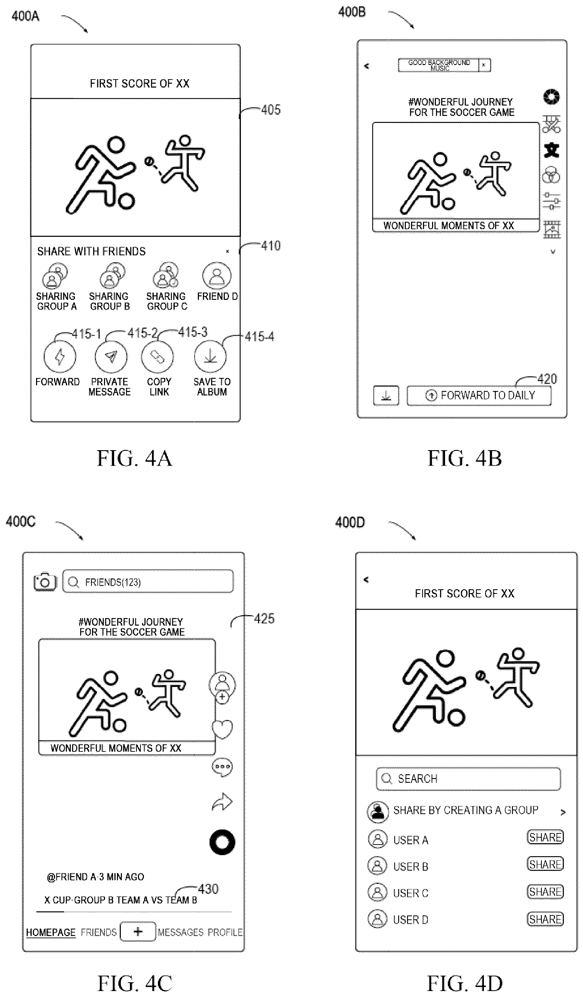

In some embodiments, in response to a selection of the sharing entry 260 for the multimedia content 230 in the live streaming interface 200, the terminal device 110 may present the sharing interface 400A as shown in FIG. 4A. In some embodiments, for the sharing component 310, the sharing component 320, and/or the sharing component 340 discussed above, the sharing interface corresponding to the corresponding multimedia content may also be triggered.

As shown in FIG. 4A, the interface 400A may include a preview area 405, which may be used to play the multimedia content 230 to be shared. With video content as an example, the video content may be played in the preview area 405 to obtain a complete browsing of the video content. In some embodiments, the style of the preview area 405 (for example, the style of the background area) may also be configured by a managing party (for example, an operator) of the live streaming room.

In some embodiments, the interface 400A may further include a selection area 410, which may present a set of sharing manners, such as sharing manners 415-1, 415-2, 415-3, and 415-4, that may be used to share the multimedia content.

In some embodiments, the sharing manner 415-1 may correspond to sharing the multimedia content as a work, for example. After receiving the selection for the sharing manner 415-1, the terminal device 110 may, for example, present the interface 400B shown in FIG. 4B.

As shown in FIG. 4B, the interface 400B may correspond to an interface for authoring a work. The interface 400B may present an initial work that is automatically authored based on the multimedia content to be shared. The user may further modify the initial work and/or share (e.g., publish or send) the automatically generated work directly.

For example, the multimedia content (picture or video clip) may be added to the work in a preconfigured style. In some embodiments, the generation of the work may also be based on the published information of the multimedia content. For example, the work may include a text portion associated with textual content of the multimedia.

In some embodiments, at least part of the content in the work may further be based on the configuration information of the live streaming room. For example, labels contained in the work may be determined automatically, for example, based on the theme of the live streaming room. Alternatively, music in the work may be determined automatically, for example, according to the live streaming content of the live streaming room.

In some embodiments, as shown in FIG. 4B, the interface 400B may include an entry 420 to publish the work. Upon receiving the selection of the entry 420, the work may be published as a personal work for the current user.

In some embodiments, other users may access the personal work published by the user, for example. FIG. 4C illustrates a play interface for works 400C presented by devices associated with other users. As shown in FIG. 4C, the play interface for works 400C may be used to present the published personal work 425.

In addition, the play interface for works 400C may further include an access entry 430 to a live streaming room corresponding to the work. If another user selects the access entry, it may be directed to the live streaming interface corresponding to the live streaming room. In some embodiments, the directed live streaming interface may directly present multimedia content with the work without considering the display logic of the multimedia content area in the live streaming interface and/or the display order of the multimedia content in the multimedia content area.

With continued reference to FIG. 4A, the sharing manner 415-2 may correspond to sharing the multimedia content in a session, for example. Correspondingly, after receiving the selection for the sharing manner 415-2, the terminal device 110 may present the interface 400D shown in FIG. 4D for selecting the session and/or the contact to be shared.

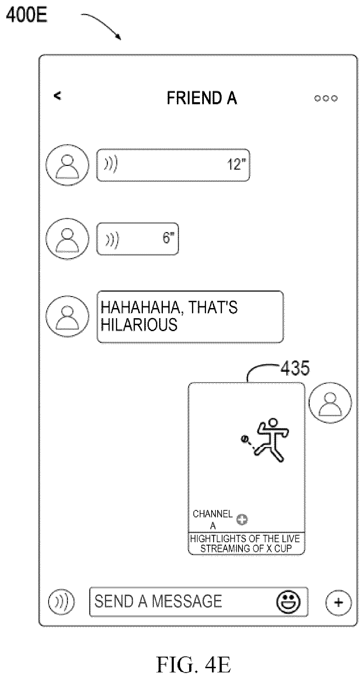

Further, the terminal device 110 may present an interface 400E as shown in FIG. 4E. As shown in FIG. 4E, the terminal device 110 may present a card message 435 corresponding to the target multimedia content in the selected session and/or the session with the selected contact.

In some embodiments, similar to the work mentioned above, the generation of the card 435 may also be based on the published information of the multimedia content to be shared. For example, the picture presented in the card message may be a cover of a video clip to be shared, and the text description of the card message may correspond to a text description of the video clip.

In some embodiments, if other users in the session select the card message 435, the device associated with the user may present the live streaming interface corresponding to the card message. In some embodiments, the live streaming interface may directly present multimedia content with the work without considering the display logic of the multimedia content area in the live streaming interface and/or display order of the multimedia content in the multimedia content area.

With continued reference to FIG. 4A, the sharing manner 415-3 may, for example, correspond to sharing the multimedia content by accessing a link. After receiving the selection of the sharing manner 415-3, the terminal device 110 may generate an access link corresponding to the target multimedia content. Such access links may include any suitable link form, such as a network address, an access password, or the like.

Further, if there are other users selecting the access link, for example, copying the access link to the browser or copy to the live application to open, the device associated with the user may present the live streaming interface corresponding to the access link. In some embodiments, the live streaming interface may directly present multimedia content with the work without considering the display logic of the multimedia content area in the live streaming interface and/or display order of the multimedia content in the multimedia content area.

With continued reference to FIG. 4A, the sharing manner 415-4 may correspond to saving the multimedia content (for example, a picture and/or a video) to a local album of the terminal device 110. It should be understood that such storing action is performed with the user being aware and authorizing such action.

Based on the manner discussed above, embodiments of the present disclosure may support the sharing of multimedia content in various flexible manners, and support accessing the live streaming room corresponding to the multimedia from the shared content. In this manner, the embodiments of the present disclosure may help people more intuitively understand the live streaming content in the live streaming room, thereby helping to increase the attention of the live streaming room.

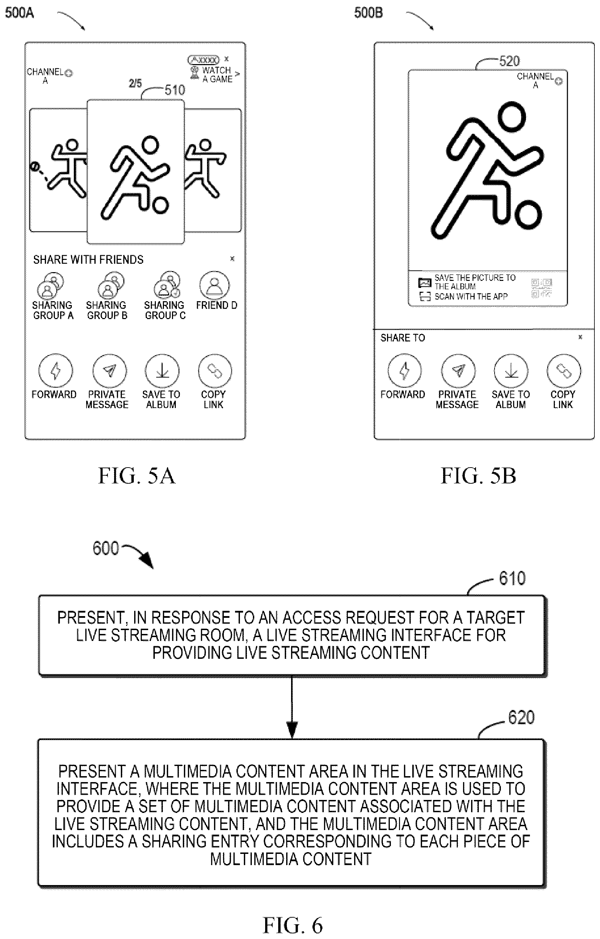

In some embodiments, embodiments in the present disclosure may also support direct sharing of a live streaming room. Specifically, the terminal device 110 may receive a sharing request for sharing a target live streaming room. For example, the user may trigger the sharing of the live streaming room by clicking the live streaming room sharing control. After receiving the sharing request, the terminal device 110 may, for example, present the sharing interface 500A shown in FIG. 5A.

As shown in FIG. 5A, the sharing interface 500A may include a preconfigured set of sharing styles 510. Such sharing style 510 may correspond to, for example, a picture background of the sharing information to be generated. In some embodiments, these sharing styles 510 may be associated with the live streaming content of the live streaming room.

Exemplarily, the sharing styles 510 may correspond to a set of pictures, and the set of pictures may be automatically generated based on the live streaming content of the live streaming room. Alternatively, the set of pictures may also be preconfigured and/or published in real time by a managing party (for example, an operator) of the live streaming room.

Further, after receiving the selection of a sharing style 510, the terminal device 110 may present the interface 500B shown in FIG. 5B. As shown in FIG. 5B, the terminal device 110 may generate the sharing information 520 for the live streaming room based on the selected sharing style 510.

Such sharing information 520 may be, for example, a picture style, a card style, a poster style, or the like, and may, for example, also present other description information related to the live streaming content of the live streaming room or the live streaming room. In addition, the sharing information 520 may also present a graphic identifier, for example, a two-dimensional code or a barcode, for connecting to the live streaming room.

Based on the manner, the embodiment of the invention may enrich the sharing style of the live streaming room and improve the enthusiasm of the user sharing the live streaming room. In addition, because such sharing style is also associated with the live streaming content, this may further improve the sharing efficiency of the information and help other users to access the live streaming room based on the sharing information.

### Example Processes

FIG. 6 illustrates a flowchart of an example process 600 for live streaming interactions, in accordance with some embodiments of the present disclosure. The process 600 may be implemented by the terminal device 110 discussed above.

As shown in FIG. 6, in block 610, the terminal device 110 presents, in response to an access request for a target live streaming room, a live streaming interface for providing live streaming content.

In block 620, the terminal device 110 presents a multimedia content area in the live streaming interface, where the multimedia content area is used to provide a set of multimedia contents associated with the live streaming content, and the multimedia content area includes a sharing entry corresponding to each multimedia content.

In some embodiments, the multimedia content area further presents time information, and the time information indicates a time instance in the live streaming content corresponding to each multimedia content .

In some embodiments, the presentation order of the set of multimedia contents in the multimedia content area is based on an order of the respective time instances.

In some embodiments, the set of multimedia contents includes at least one of: a first multimedia content automatically generated based on the live streaming content; a second multimedia content published by a managing party of the target live streaming room during the live streaming.

In some embodiments, the process 600 further includes: receiving publication information about a third multimedia content that is newly published; and presenting the third multimedia content in the multimedia content area.

In some embodiments, the process 600 further includes presenting, in response to receiving the publication information, at a predetermined location in the live streaming interface, a first sharing component associated with the third multimedia content regardless of whether the multimedia content area is currently presented in the live streaming interface.

In some embodiments, the process 600 further includes: ceasing to present the first preview component after the first sharing component is presented for a predetermined duration.

In some embodiments, the publication information includes: a text description of the newly published multimedia content; and/or a cover of the newly published multimedia content.

In some embodiments, the process 600 further includes: presenting, in response to a playback request for the live streaming content, a time axis corresponding to the live streaming content; determining, based on the playback time instance indicated by the time axis, fourth multimedia content associated with the playback time instance in the set of multimedia contents; and presenting a second sharing component associated with the fourth multimedia content.

In some embodiments, the process 600 further includes: receiving a selection for a target sharing entry, where the target sharing entry corresponds to a target multimedia content in a set of multimedia contents; and presenting a sharing interface comprising a preview area and a selection area, where the preview area plays the target multimedia content, and the selection area presents a set of sharing manners for sharing the target multimedia content.

In some embodiments, the process 600 further includes: generating, in response to a selection of the first sharing manner from the set of sharing manners, a work corresponding to the target multimedia content.

In some embodiments, the generation of the work is further based on the publication information of the target multimedia content.

In some embodiments, the process 600 further includes: presenting, at a first device associated with the first user, a play interface for works corresponding to the work, where the play interface for works includes an access entry to the target live streaming room; and in response to a selection of the access entry by the first user, presenting at the first device, a first live streaming interface corresponding to the target live streaming room, so that the target multimedia content corresponding to the work is displayed in the first live streaming interface.

In some embodiments, the process 600 further includes: generating, in response to a selection of a second sharing manner from the set of sharing manners, a card message corresponding to the target multimedia content in the target session.

In some embodiments, the cover and/or text description of the card message is determined based on the publication information of the target multimedia content.

In some embodiments, the process 600 further includes: in response to a selection of a card message by a second user associated with the target session, presenting at a second device associated with the second user, a second live streaming interface corresponding to the target live streaming room, so that the target multimedia content corresponding to the card message is displayed in the second live streaming interface.

In some embodiments, the process 600 further includes: generating, in response to a selection of a third sharing manner from the set of sharing manners, an access link corresponding to the target multimedia content.

In some embodiments, the process 600 further includes: in response to a selection of the access link by a third user, presenting at third device associated with the third user, a third live streaming interface corresponding to the target live streaming room, so that the target multimedia content corresponding to the access link is displayed in the third live streaming interface.

In some embodiments, the process 600 further includes: receiving a sharing request for sharing the target live streaming room; presenting a preconfigured set of sharing styles, the set of sharing styles being associated with the live streaming content; and generating, in response to a selection of a target sharing style from the set of sharing styles, sharing information for the target live streaming room based on the target sharing style.

In some embodiments, the set of sharing styles corresponds to a set of pictures associated with the live streaming room.

### Example Apparatus and Apparatus

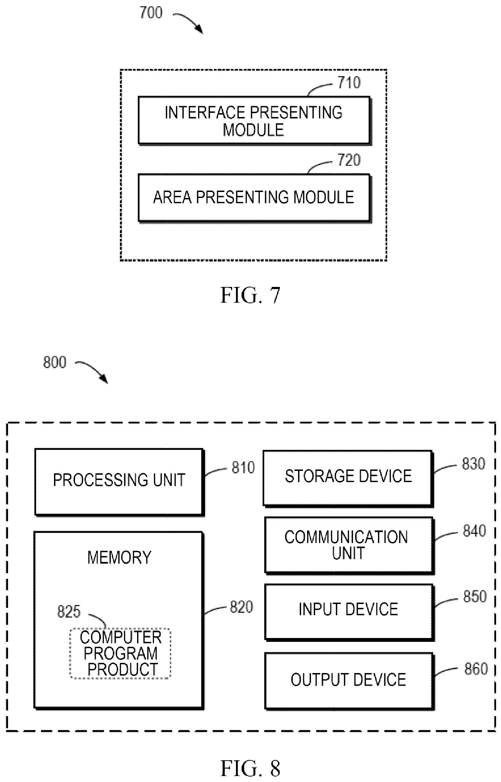

Embodiments of the present disclosure also provide a corresponding apparatus for implementing the above method or process. FIG. 7 is a schematic structural block diagram of an apparatus 700 for live streaming interaction according to some embodiments of the present disclosure.

As shown in FIG. 7, the apparatus 700 includes an interface presentation module 710, configured to present, in response to an access request for a target live streaming room, a live streaming interface for providing live streaming content.

**In** addition, the apparatus 700 further includes an area presenting module 720, configured to present a multimedia content area in the live streaming interface, where the multimedia content area includes a sharing entry corresponding to each multimedia content.

In some embodiments, the multimedia content area further presents time information indicating a time instance in the live streaming content corresponding to each multimedia content.

**In** some embodiments, the presentation order of the set of multimedia contents in the multimedia content area is based on an order of the respective time instances.

**In** some embodiments, the set of multimedia contents includes at least one of: a first multimedia content automatically generated based on the live streaming content; a second multimedia content published by a managing party of the target live streaming room during the live streaming.

**In** some embodiments, the apparatus 700 is further configured to: receive publication information about a third multimedia content that is newly published; and present the third multimedia content in the multimedia content area.

**In** some embodiments, the apparatus 700 is further configured to present, in response to receiving the publication information, at a predetermined location in the live streaming interface, a first sharing component associated with the third multimedia content regardless of whether the multimedia content area is currently presented in the live streaming interface.

In some embodiments, the apparatus 700 is further configured to cease to present the first preview component after the first sharing component is presented for a predetermined duration.

In some embodiments, the apparatus 700 is further configured to: a text description of the newly published multimedia content; and/or a cover of the newly published multimedia content.

In some embodiments, the apparatus 700 is further configured to: present, in response to a playback request for the live streaming content, a time axis corresponding to the live streaming content; determine, based on the playback time instance indicated by the time axis, a fourth multimedia content associated with the playback time instance in the set of multimedia contents; and present a second sharing component associated with the fourth multimedia content.

In some embodiments, the apparatus 700 is further configured to: receive a selection for a target sharing entry, where the target sharing entry corresponds to a target multimedia content in the set of multimedia contents; and present a sharing interface, where the sharing interface includes a preview area and a selection area, where the preview area plays the target multimedia content, and the selection area presents a set of sharing manners for sharing the target multimedia content.

In some embodiments, the apparatus 700 is further configured to generate, in response to a selection of a first sharing manner from the set of sharing manners, a work corresponding to the target multimedia content.

In some embodiments, the generation of the work is further based on the publication information of the target multimedia content.

In some embodiments, the apparatus 700 is further configured to: present, at a first device associated with a first user, a play interface for works corresponding to the work, where the play interface for works includes an access entry to the target live streaming room; and present at the first device, in response to a selection of the access entry by the first user, a first live streaming interface corresponding to the target live streaming room, so that the target multimedia content corresponding to the work is displayed in the first live streaming interface.

In some embodiments, the apparatus 700 is further configured to generate, in response to a selection of a second sharing manner from the set of sharing manners, a card message corresponding to the target multimedia content in the target session.

In some embodiments, the cover and/or text description of the card message is determined based on the publication information of the target multimedia content.

In some embodiments, the apparatus 700 is further configured to, present at a second device associated with a second user, in response to a selection of a card message by the second user associated with the target session, a second live streaming interface corresponding to the target live streaming room, so that the target multimedia content corresponding to the card message is displayed in the second live streaming interface.

In some embodiments, the apparatus 700 is further configured to generate, in response to a selection of a third sharing manner from the set of sharing manners, an access link corresponding to the target multimedia content.

In some embodiments, the apparatus 700 is further configured to: present at third device associated with a third user, in response to a selection of the access link by the third user, a third live streaming interface corresponding to the target live streaming room, so that the target multimedia content corresponding to the access link is displayed in the third live streaming interface.

In some embodiments, the apparatus 700 is further configured to: receive a sharing request for sharing a target live streaming room; present a preconfigured set of sharing styles, the set of sharing styles being associated with the live streaming content; and generate, in response to a selection of a target sharing style from the set of sharing styles, sharing information for the target live streaming room based on the target sharing style.

In some embodiments, the set of sharing styles corresponds to a set of pictures associated with the live streaming room.

The components included in the apparatus 700 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the elements in the apparatus 700 may be implemented, at least in part, by one or more hardware logic components. By way of example and not limitation, exemplary types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

FIG. 8 illustrates a block diagram of a computing device/server 800 in which one or more embodiments of the present disclosure may be implemented. It should be understood that the computing device/server 800 illustrated in FIG. 8 is merely exemplary and should not constitute any limitation on the functionality and scope of the embodiments described herein.

As shown in FIG. 8, the computing device/server 800 is in the form of a general-purpose computing device. Components of the computing device/server 800 may include, but are not limited to, one or more processors or processing units 810, a memory 820, a storage device 830, one or more communication units 840, one or more input devices 860, and one or more output devices 860. The processing unit 810 may be an actual or virtual processor and capable of performing various processes according to programs stored in the memory 820. In multiprocessor systems, multiple processing units execute computerexecutable instructions in parallel to improve the parallel processing capability of computing device/server 800.

Computing device/server 800 typically includes a plurality of computer storage media. Such media may be any available media accessible by the computing device/server 800, including, but not limited to, volatile and non-volatile media, removable and non-removable media. The memory 820 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 830 may be a removable or non-removable medium and may include a machine-readable medium, such as a flash drive, magnetic disk, or any other medium, which may be capable of storing information and/or data (e.g., training data for training) and may be accessed within computing device/server 800.

The computing device/server 800 may further include additional removable/non-removable, volatile/non-volatile storage media. Although not shown in FIG. 8, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 820 may include a computer program product 825 having one or more program modules configured to perform various methods or actions of various embodiments of the present disclosure.

The communications unit 840 implements communications with other computing devices over a communications medium. Additionally, the functionality of components of the computing device/server 800 may be implemented in a single computing cluster or multiple computing machines capable of communicating over a communication connection. Thus, the computing device/server 800 may operate in a networked environment using logical connections with one or more other servers, network personal computers (PCs), or another network node.

The input device 850 may be one or more input devices such as a mouse, a keyboard, a trackball, or the like. The output device 860 may be one or more output devices, such as a display, a speaker, a printer, or the like. Computing device/server 800 may also communicate with one or more external devices (not shown) as needed, external devices such as storage devices, display devices, etc. , communicate with one or more devices that enable a user to interact with computing device/server 800, or communicate with any device (e.g., network card, modem, etc. ) that enables computing device/server 800 to communicate with one or more other computing devices. Such communication may be performed via an input/output (I/O) interface (not shown).

According to example implementations of the present disclosure, there is provided a computer-readable storage medium having one or more computer instructions stored thereon, wherein one or more computer instructions are executed by a processor to implement the method described above.

Aspects of the present disclosure are described herein with reference to flowcharts and/or block diagrams of methods, apparatuses (systems), and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may also be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the implementations disclosed herein.

## Claims

1. A method for live streaming interactions comprising:
presenting, in response to an access request for a target live streaming room, a live streaming interface for providing live streaming content; and
presenting a target area in the live streaming interface, the target area providing a set of multimedia contents associated with the live streaming content, wherein the multimedia contents correspond to respective time instants related to the live streaming content, and the target area comprises a sharing entry corresponding to each multimedia content.

2. The method of claim 1, wherein the target area further presents time information indicating a time instant corresponding to each multimedia content.

3. The method of claim 1, wherein a presentation order of the set of multimedia contents in the target area is based on an order of the respective time instants.

4. The method of claim 1, wherein the set of multimedia contents comprises at least one of:
a first multimedia content automatically generated based on the live streaming content;
a second multimedia content published by a managing party of the target live streaming room during the live streaming.

5. The method of claim 1, further comprising:
receiving publication information about a third multimedia content that is newly published; and
presenting the third multimedia content in the target area.

6. The method of claim 5, further comprising:
in response to receiving the publication information, presenting, at a predetermined location in the live streaming interface, a first sharing component associated with the third multimedia content regardless of whether the target area is currently presented in the live streaming interface.

7. The method of claim 6, further comprising:
ceasing to present the first preview component after the first sharing component is presented for a predetermined duration.

8. The method of claim 5, wherein the publication information comprises:
a text description of the newly published multimedia content; and/or
a cover of the newly published multimedia content.

9. The method of claim 1, further comprising:
presenting, in response to a playback request for the live streaming content, a time axis corresponding to the live streaming content;
determining, based on the playback time instant indicated by the time axis, a fourth multimedia content associated with the playback time instant in the set of multimedia contents; and
presenting, a second sharing component associated with the fourth multimedia content.

10. The method of claim 1, further comprising:
receiving a selection for a target sharing entry, the target sharing entry corresponding to a target multimedia content in the set of multimedia contents; and
presenting a sharing interface comprising a preview area and a selection area, wherein the preview area plays the target multimedia content, and the selection area presents a set of sharing manners for sharing the target multimedia content.

11. The method of claim 10, further comprising:
generating, in response to a selection of a first sharing manner from the set of sharing manners, a work corresponding to the target multimedia content.

12. The method of claim 11, wherein the generation of the work is further based on the publication information of the target multimedia content.

13. The method of claim 11, further comprising:
presenting, at a first device associated with a first user, a play interface for works corresponding to the work, wherein the play interface for works comprises an access entry to the target live streaming room; and
in response to a selection of the access entry by the first user, presenting, at the first device, a first live streaming interface corresponding to the target live streaming room, so that the target multimedia content corresponding to the work is displayed in the first live streaming interface.

14. The method of claim 10, further comprising:
in response to a selection of a second sharing manner from the set of sharing manners, generating, in a target session, a card message corresponding to the target multimedia content.

15. The method of claim 14, wherein the generation of the card message is further based on the publication information of the target multimedia content.

16. The method of claim 14, further comprising:
in response to a selection of a card message by a second user associated with the target session, presenting, at a second device associated with the second user, a second live streaming interface corresponding to the target live streaming room, so that the target multimedia content corresponding to the card message is displayed in the second live streaming interface.

17. The method of claim 10, further comprising:
generating, in response to a selection of a third sharing manner from the set of sharing manners, an access link corresponding to the target multimedia content.

18. The method of claim 17, further comprising:
in response to a selection of the access link by a third user, presenting, at a third device associated with the third user, a third live streaming interface corresponding to the target live streaming room, so that the target multimedia content corresponding to the access link is displayed in the third live streaming interface.

19. The method of claim 1, further comprising:
receiving a sharing request for sharing the target live streaming room;
presenting a preconfigured set of sharing styles associated with the live streaming content; and
generating, in response to a selection of a target sharing style from the set of sharing styles, sharing information for the target live streaming room based on the target sharing style.

20. The method of claim 19, wherein the set of sharing styles corresponds to a set of pictures associated with the live streaming room.

21. An apparatus for live streaming interaction comprising:
an interface presenting module, configured to present, in response to an access request for a target live streaming room, a live streaming interface for providing live streaming content; and
an area presenting module, configured to present a target area in the live streaming interface, the target area providing a set of multimedia contents associated with the live streaming content, wherein the multimedia content correspond to respective time instants related to the live streaming content, and the target area comprises a sharing entry corresponding to each multimedia content.

22. An electronic device includes:
at least one processing unit; and
at least one memory coupled to the at least one processing unit and storing instructions for execution by the at least one processing unit, the instructions, when executed by the at least one processing unit, causing the apparatus to perform the method of any of claims 1-20.

23. A computer-readable storage medium having stored thereon a computer program, which when executed by a processor, implements the method of any of claims 1-20.
